(19) Europäisches Patentamt
European Patent Office
Office européen des brevets

(11) **EP 3 227 173 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(21) Anmeldenummer: **15775150.4**

(22) Anmeldetag: **29.09.2015**

(51) Int Cl.:
**B62M 6/50** *(2010.01)*  **B62M 6/45** *(2010.01)*

(86) Internationale Anmeldenummer:
**PCT/EP2015/072325**

(87) Internationale Veröffentlichungsnummer:
**WO 2016/087075 (09.06.2016 Gazette 2016/23)**

(54) **ERKENNUNG EINES SCHALTVORGANGS**

DETECTION OF A SHIFT OPERATION

DÉTECTION D'UN PROCESSUS DE PASSAGE DES RAPPORTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2014 DE 102014224666**

(43) Veröffentlichungstag der Anmeldung:
**11.10.2017 Patentblatt 2017/41**

(73) Patentinhaber: **Robert Bosch GmbH**
**70442 Stuttgart (DE)**

(72) Erfinder:
• **STEGMAIER, Juergen**
  **72074 Tuebingen (DE)**
• **SCHOCK, Wolfram**
  **72770 Ohmenhausen (DE)**
• **BAUMGAERTNER, Daniel**
  **72070 Tuebingen (DE)**

(56) Entgegenhaltungen:
**EP-A1- 2 724 925      WO-A1-2014/059953**
**WO-A2-2011/158220     DE-A1-102012 219 991**

## Beschreibung

### Stand der Technik

Diese Erfindung betrifft ein Verfahren zur Erkennung eines Schaltvorgangs eines Getriebes eines mit Motorkraft eines Motors und/oder Pedalkraft betreibbaren Fahrzeuges. Weiter betrifft die Erfindung eine Schalterkennungsvorrichtung für die Erkennung eines Schaltvorgangs eines Getriebes eines mit Motorkraft eines Motors und/oder Pedalkraft betreibbaren Fahrzeuges.

Ein Fahrzeug, welches mit Motorkraft eines Motors und/oder Pedalkraft betreibbar ist, hat in vielen Fällen ein Getriebe mit variabler Übersetzung zur Anpassung der Trittfrequenz an eine geeignete Raddrehzahl. Zur Optimierung der Ansteuerung des Motors, der insbesondere ein Elektromotor sein kann, ist es hilfreich, wenn die Motorelektronik Informationen darüber hat, dass ein Schaltvorgang ausgeführt wird. Es ist bereits bekannt, zur Erkennung des Schaltvorganges eine Änderung der Motordrehzahl heranzuziehen, um auf einen Schaltvorgang zu schließen. Dies alleine ist jedoch nicht ausreichend, um einen Schaltvorgang sicher zu erkennen, da sich Motordrehzahländerungen auch aufgrund anderer Ursachen ergeben können.

In der WO2011158220A2 wird vorgeschlagen, das Drehmoment, welches der Fahrer auf die Pedale aufbringt, als zusätzlichen Indikator heranzuziehen. Eine plötzliche starke Verringerung des Fahrerdrehmoments deutet auf eine starke Entlastung des Antriebs und somit auf einen Schaltvorgang hin. Nachteilig daran ist, dass ein Sensor zur Erfassung von mittels der Pedale erzeugtem Drehmoments erforderlich ist, welche nicht unerhebliche Kosten verursachen.

Aus der DE 10 2012 219 991 A1, welche den nächstliegenden Stand der Technik darstellt, ist bekannt, verschiedene Sensorgrößen zu verwenden, um einen Schaltvorgang zu erkennen. Dabei kann beispielsweise die Stromaufnahme herangezogen werden, um die Zunahme des Energiebedarfs bei einem Drehzahlanstieg zu erkennen. Darüber hinaus können auch andere Sensoren herangezogen werden, um einen Schaltvorgang zu erkennen. Hierzu werden neben dem Stromsensor beispielsweise ein Drehzahlsensor am elektrischen Hilfsantrieb und/oder an der Tretkurbel sowie ein Beschleunigungssensor zur Erfassung der Beschleunigung eines Bauteils des Antriebsstrangs. Durch die Erfassung beispielsweise der Beschleunigung der Kette kann so auf einen Schaltvorgang geschlossen werden.

### Offenbarung der Erfindung

Um die vorgenannten Nachteile auszuräumen, wird erfindungsgemäß vorgeschlagen, zur Erkennung eines Schaltvorganges ein Motorlastmoment zu berechnen, das von dem Motor abgegeben wird. Dieses Motorlastmoment hängt von dem Motordrehmoment ab, welches der Motor inhärent erzeugt. Das Motordrehmoment wird, bevor es als Motorlastmoment abgegeben wird, verringert oder verstärkt, wenn der Motor Drehzahländerungen unterliegt. Aufgrund des Massenträgheitsmoments der drehenden Teile des Motors wird bei einer Drehzahlerhöhung kinetische Energie in dem rotierenden System aufgenommen oder kinetische Energie von dem rotierenden System abgegeben, wenn sich die Drehzahl der rotierenden Teile verringert. Bei einem Schaltvorgang sind signifikante Schwankungen des Motorlastmoments zu beobachten, sodass sich diese Größe gut zur Erkennung des Schaltvorgangs eignet. Ein Vorteil des erfindungsgemäßen Verfahrens ist es, dass die Drehzahl und das inhärente Antriebsmoment des Motors leicht zu bestimmen sind, wozu im Normalfall zusätzlich zu den üblicherweise vorhandenen Sensoren keine weiteren Sensoren erforderlich sind. Insbesondere kann an einem Elektromotor das inhärente Antriebsmoment auf einfache Weise über den Strom zu dem Motor bestimmt werden. Insbesondere bricht das Lastmoment und damit auch der Motorstrom bei einem Schaltvorgang ein. Letzteres ergibt sich durch eine erhöhte Gegenspannung, die durch die Beschleunigung der rotierenden Motorteile entsteht. Ein weiterer Vorteil ist, dass die Schalterkennung unabhängig von der Einstellung des Motorreglers ist. Der Motorregler kann dahingehend eingestellt werden, dass für verschiedene Betriebszustände oder verschiedene Fahrzeuge unterschiedliche Anstiegsraten für die Drehzahl vorgegeben werden, sodass sich unterschiedliche Motorregler ergeben. Der Einbruch des Lastmoments tritt jedoch mit allen Motorreglern auf.

Das Motorlastmoment kann mit folgender Formel berechnet werden:

$$T_{Last} = \frac{dn_{Motor}}{dt} \cdot J_{Motor} - T_{Motor}$$

Dabei sind $n_{Motor}$ die Motordrehzahl, $J_{Motor}$ das Massenträgheitsmoment des Motors und $T_{Motor}$ ein inhärentes Motordrehmoment. $T_{Last}$ ist das Motorlastmoment. Bei einem Schaltvorgang, insbesondere bei der Wahl einer längeren Übersetzung, kann man im Allgemeinen zwei Vorgänge beobachten: Die Motordrehzahl steigt an und das inhärente Motordrehmoment nimmt ab. In Summe ergibt sich, dass das Motorlastmoment ansteigt. Da dies zeitlich ein schneller Vorgang ist, ergibt sich eine starke Änderung des Motorlastmoments. Diese Änderung kann aus einer Zeitreihe aus Informationen über das Notfalllastmoment abgeleitet werden. Insbesondere bei einer Kettenschaltung ergibt sich kurzfristig eine leerlaufähnliche Situation, in der der Kraftfluss von dem Antriebskettenrad zu dem Abtriebskettenrad unterbrochen ist, was mit dem geänderten, von der Kette zu überbrückenden Abstand zwischen unterschiedlichen Kettenrädern verschiedener Übersetzungen zusammenhängt. Wird der Schaltvorgang nicht erkannt, so führt die fortdauernde Leistung des Motors dazu, dass die antriebsseitig rotierenden Teile beschleunigt werden und bei Wiedereinsetzen des Kraftflusses zu einem Schlag im Antrieb führen. Dies führt zu einer schlagartigen Straffung der Kette und zu einer erheblichen Belastung derselben. Bei rechtzeitiger Erkennung des Schaltvorganges kann die Motorleistung zurückgenommen und der Schlag vermieden werden. Zudem ist der Schlag unangenehm für den Fahrer. Auch bei Schaltvorgängen mit anderen Getrieben als dem vorstehend spezifisch genannten kann es zur Schonung des Antriebs beziehungsweise des Getriebes vorteilhaft sein, den Schaltvorgang zu erkennen und während eines Schaltvorganges die Motorleistung zurückzunehmen.

Das inhärente Motordrehmoment kann ermittelt werden, indem eine Stromstärke durch den Motor bestimmt wird, wobei der Strom durch eine oder mehrere Wicklungen des Motors fließt. Dazu kann der Strom außerdem durch einen Shuntwiderstand fließen, an dem ein Spannungsabfall gemessen wird. In einer Variante ist denkbar, das inhärente Motordrehmoment aus einer Stromstärke zu ermitteln, die bei einem bekannten Rotorwinkel des Motors erfasst wird. Nicht nur zu diesem Zweck kann der Motor mit einem Rotorlagesensor verbunden sein. Zur Ermittlung der Motordrehzahl kann mehrfach ein Rotorwinkel gemessen werden. Die Drehzahl kann als mittlere Drehzahl ermittelt werden, indem der Winkel zwischen zwei Rotorpositionen durch Subtraktion berechnet und durch die zwischen den Messzeitpunkten liegende Zeit geteilt wird. Alternativ oder zusätzlich kann ein Beobachter, der insbesondere als Software implementiert ist, die Motordrehzahl schätzen, in dem er Werte für Winkelgeschwindigkeit, Winkelbeschleunigung und der zeitlichen Änderung der Winkelbeschleunigung berechnet und aus diesen eine momentane Motordrehzahl ermittelt. Dadurch kann ein aktuellerer Wert als bei einer Mittelwertberechnung bereitgestellt werden.

In einer Ausführungsform des Verfahrens werden eine Beschleunigung des Fahrzeuges gemessen und entsprechende Beschleunigungsinformationen bei der Erkennung eines Schaltvorganges mit berücksichtigt. Dies ist vorteilhaft, weil es vorkommen kann, dass auch durch überfahrene Unebenheiten kurzzeitige starke Änderungen der Motordrehzahl und damit auch des Motorlastmomentes auftreten können. Um eine Fehlerkennung eines Schaltvorganges zu verhindern, kann ein Beschleunigungssignal des Fahrzeuges mit dem Verlauf des Motorlastmomentes in Beziehung gesetzt werden, um aus dem Verhältnis, insbesondere aus einem Gleichlauf der beiden Signale, abzuleiten, ob eine Fehlerkennung vorliegt. Insbesondere kann an Hand der Beschleunigungsinformationen festgestellt werden, dass eine Geländefahrt vorliegt.

Eine Geländefahrt wird an deutlichen negativen Ausschlägen des zeitlichen Verlaufes des Motorlastmomentes erkannt, wobei auch positive Ausschläge des Motorlastmomentes vorhanden sind, die sich durch Sprünge im Gelände ergeben können. Diese Art der Erkennung ist besonders für E-Bikes mit starrer Hinterradaufhängung geeignet. Das Motorlastmoment unterliegt auch bei einer Straßenfahrt einem gewissen Rauschen, jedoch ist dieses Rauschen erheblich höher, wenn im Gelände gefahren wird. Beispielsweise kann die Kette in Schwingungen geraten, etwa beim Anfahren im Gelände, oder das Hinterrad kann kurzzeitig die Haftung verlieren, insbesondere, wenn es rutscht oder abhebt, was in Schwankungen des Motorlastmoments resultiert.

Als Reaktion auf die Erkennung einer Geländefahrt wird verfahrensgemäß die Erkennung eines Schaltvorganges unempfindlicher gemacht oder abgeschaltet. Auf diese Weise werden Fehlerkennungen vermindert oder ausgeschlossen.

Erfindungsgemäß wird eine zeitliche Ableitung des Motorlastmoments mit einem Schwellenwert verglichen, um anhand eines Vergleichsergebnisses einen Schaltvorgang festzustellen. Durch die Festlegung der Höhe des Schwellenwertes kann die Empfindlichkeit der Erkennung eines Schaltvorganges eingestellt werden. Beispielsweise kann der Schwellenwert in Abhängigkeit von an dem Fahrzeug gemessenen Beschleunigungen eingestellt werden, um die Wahrscheinlichkeit von Fehlerkennungen bei unruhiger Fahrt, insbesondere Geländefahrt, zu verringern. Besonders geeignet ist die Erfassung vertikaler Beschleunigungen des Fahrzeuges. Alternativ oder zusätzlich können auch Beschleunigungen in andere Richtungen geeignet sein. Es werden bei erhöhtem Schwellenwert insbesondere Schaltvorgänge unter hoher Motorlast mit guter Sicherheit erkannt, während Schaltvorgänge unter geringer Motorlast tendenziell nicht mehr erkannt werden. Eine Nichterkennung eines Schaltvorganges wird gegenüber einer Fehlerkennung eines Schaltvorganges bevorzugt, weil die Folgen einer Fehlerkennung einen Fahrer erheblich irritieren können. Die größere Empfindlichkeit der Erkennung eines Schaltvorganges bei einer Straßenfahrt bewirkt jedoch, dass auch Schaltvorgänge unter geringer Motorlast mit guter Sicherheit erkannt werden.

Weiter kann ein Schwellenwert, mit dem die Größe des Lastmoments zur Erkennung eines Schaltvorgangs verglichen wird, auf Basis eines dem Schaltvorgang vorausgehenden Lastmomentverlaufs adaptiert werden. Insbesondere kann der Schwellenwert nach einem Einbruch des Lastmoments erhöht werden, vorzugsweise unmittelbar danach.

Einer Veränderung eines Schwellenwerts durch eine Einflussgröße steht es gleich, den Schwellenwert zu belassen und stattdessen mit derselben Einflussgröße die zeitliche Ableitung des Lastmoments in entgegensetzter Weise zu beeinflussen.

In einer weiteren Ausführungsform wird zusätzlich zur Heranziehung des Motorlastmoments eine Erhöhung der Motordrehzahl zur Erkennung eines Schaltvorgangs herangezogen. Eine Erhöhung der Motordrehzahl wird jedoch nicht als Schaltvorgang erkannt, wenn dieser eine Verringerung des Motorlastmoments, eine vertikal nach oben gerichtete Beschleunigung des Fahrzeuges und/oder eine Bremsbeschleunigung des Fahrzeuges vorausgeht. Eine nach oben gerichtete Beschleunigung des Fahrzeuges kann bedingen, dass ein oder mehrere Räder des Fahrzeuges abheben. Eine Erhöhung der Motordrehzahl ist aufgrund des Wegfalls eines großen Anteils der Antriebslast daher nicht die Folge eines Schaltvorganges. Ebenso kann durch starkes Bremsen, insbesondere Blockieren eines Hinterrades, bewirkt werden, dass der Motor starken Drehzahländerungen unterworfen wird, wobei insbesondere beim Loslassen der Bremse eine starke Drehzahlerhöhung am Motor auftreten kann. Daher ist es sinnvoll, die sich aus solchen Vorgängen ergebenden Schwankungen des Motorlastmomentes nicht als Schaltvorgang zu interpretieren.

Insbesondere wird eine Geländefahrt bei Überschreitung eines vorgegebenen Ausmaßes von negativen Ausschlägen der Beschleunigung festgestellt. Solche starken negativen Ausschläge können etwa bei größeren Sprüngen auftreten, aber auch beim Überfahren von Schlaglöchern oder beim Herunterfahren von Bordsteinen oder aus größerer Höhe. Stärkere Schläge etwa durch Bodenunebenheiten können stärkere Beschleunigungen nach oben zur Folge haben.

Bei der Messung von Beschleunigungen können eine vertikale und/oder eine oder mehrere horizontale Beschleunigungen gemessen werden. Aus den gemessenen Beschleunigungen können zusammengesetzte Beschleunigungsvektoren abgeleitet werden.

In einem weiteren Aspekt der Erfindung wird eine Schalterkennungsvorrichtung zur Erkennung eines Schaltvorganges vorgeschlagen. Diese ist dazu eingerichtet, ein ein Verfahren zur Erkennung eines Schaltvorgangs nach den Merkmalen des Anspruchs 1 durchzuführen. Die Berechnung des Motorlastmomentes kann wie in Bezug auf das vorstehend beschriebene Verfahren diskutiert berechnet werden. Es ergeben sich dieselben Vorteile, die ebenfalls schon in Bezug auf das vorstehend beschriebene Verfahren erläutert wurden.

In einer Ausführungsform der Schalterkennungsvorrichtung weist diese einen Beschleunigungssensor auf. Dieser kann räumlich getrennt von anderen Teilen der Schalterkennungsvorrichtung angeordnet sein. Mittels des Beschleunigungssensors kann eine Beschleunigung des Fahrzeuges zumindest in einer Richtung, bevorzugt jedoch in vertikaler Richtung und insbesondere zusätzlich in horizontaler Richtung gemessen werden. Die Schalterkennungsvorrichtung kann dazu eingerichtet sein, wie vorstehend beschrieben einen Schwellenwert zur Erkennung eines Schaltvorganges auf Basis von Beschleunigungssignalen anzupassen und/oder eine Geländerfahrt zu erkennen und bei der Schalterkennung zu berücksichtigen .

In einer weiteren Ausführungsform der Schalterkennungsvorrichtung ist der Beschleunigungssensor an einem Lenker des Fahrzeuges, insbesondere eines Elektrofahrrades, angeordnet. Bevorzugt ist der Beschleunigungssensor an oder in einer Bedieneinheit am Lenker angeordnet. Er kann jedoch auch an einer Batterie oder an einer Antriebseinheit angeordnet sein.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1 eine schematische Ansicht eines mit Motorkraft eines Motors und/oder Pedalkraft betreibbaren Fahrzeuges, nämlich eines Elektrofahrrads,

Figur 2a ein Diagramm, in dem das Motorlastmoment während eines Schaltvorganges über der Zeit dargestellt ist,

Figur 2b ein Diagramm, in welchem eine Motordrehzahl über denselben Zeitabschnitt wie in Figur 2a dargestellt ist,

Figur 3a ein Diagramm eines Motorlastmomentes über der Zeit und eines variabel einstellbaren Schwellenwertes über der Zeit,

Figur 3b eine Motordrehzahl über denselben Zeitabschnitt, der auch in der Figur 3a gezeigt ist und

Figur 3c ein Diagramm eines Beschleunigungssignals über denselben Zeitraum, der in auch in den Figuren 3a und 3b gezeigt ist.

Ausführungsformen der Erfindung

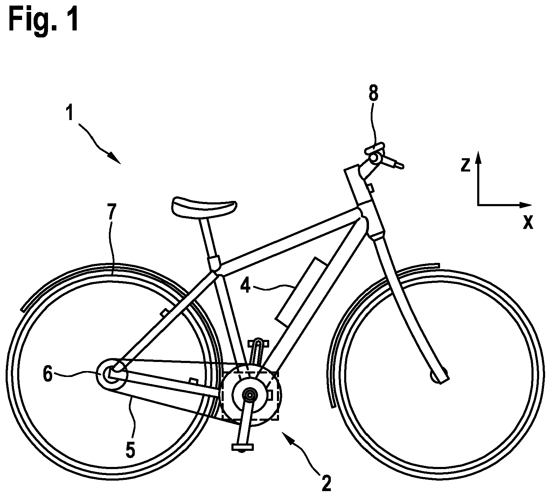

Figur 1 zeigt eine Seitenansicht eines mit Motorkraft und/oder Pedalkraft betreibbaren Fahrzeuges in Form eines Elektrofahrrades 1. Das Elektrofahrrad 1 umfasst eine Antriebseinheit 2, welche Drehmoment erzeugt, das über eine Kette 5 an ein Ritzel 6 eines Hinterrades 7 geleitet wird. Das Elektrofahrrad 1 verfügt über eine Kettenschaltung, die nicht im Detail dargestellt ist. Die Kettenschaltung kann vom Fahrer oder automatisch bedient werden. Der Motor des Elektrofahrrades wird aus einer Batterie 4 versorgt. Am Lenker des Elektrofahrrades ist eine Bedieneinheit 8 angeordnet. In der Bedieneinheit ist ein Beschleunigungssensor angeordnet, welcher Beschleunigungsinformationen liefert, die zur Verbesserung der Erkennung eines Schaltvorganges eingesetzt werden können. Der Beschleunigungssensor kann aus mehreren einzelnen Beschleunigungsaufnehmern bestehen und Beschleunigung sowohl in Fahrtrichtung X als auch in vertikaler Richtung Z aufnehmen. Denkbar ist weiter, dass der Beschleunigungssensor Beschleunigungen normal zur Betrachtungsebene aufnehmen kann.

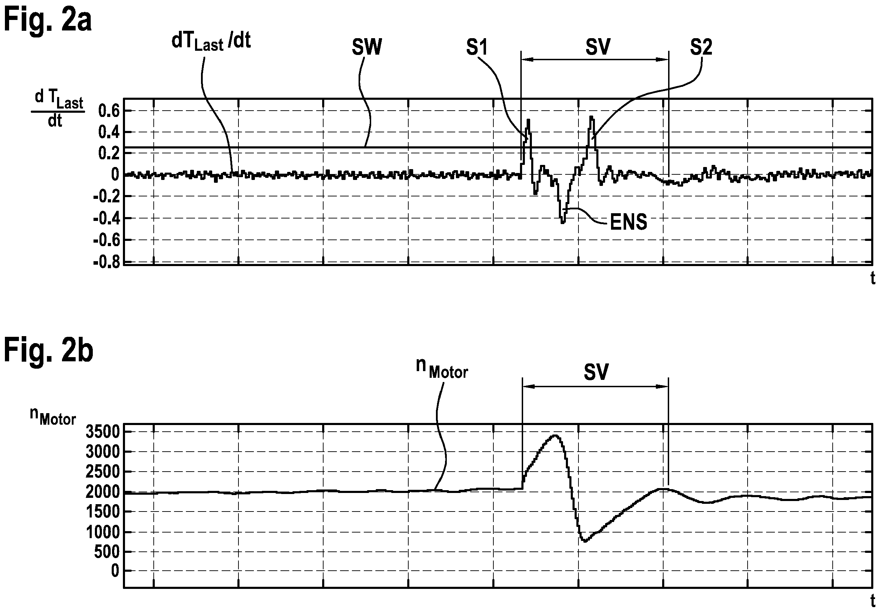

Figur 2a zeigt ein Diagramm von berechneten Werten einer zeitlichen Ableitung eines Motorlastmomentes $dT_{Last}/dt$ über der Zeit t, wobei ein Teil der Werte während eines Schaltvorganges SV aufgezeichnet wurde. In das Diagramm ist weiter ein Schwellenwert SW eingezeichnet, welcher oberhalb der Werte der zeitlichen Ableitung des Motorlastmomentes $dT_{Last}/dt$ liegt. Überschreitet die Ableitung des Lastmomentes $dT_{Last}/dt$ den Schwellenwert SW, so wird ein Schaltvorgang SV erkannt. Durch die Ableitung des Motorlastmomentes $T_{Last}$ nach der Zeit werden Anstiege des Motorlastmomentes $T_{Last}$ überhöht dargestellt und bilden daher eine gute Basis zur Erkennung eines plötzlichen Anstiegs des Motorlastmomentes $T_{Last}$, wie er bei der Auslösung eines Schaltvorganges vorkommt. Nach einer ersten Spitze S1 der Ableitung des Motorlastmomentes $T_{Last}$ verläuft diese zu einem Einbruch ENS nach der Spitze S1 mit Werten erheblich unterhalb der Werte vor Eintritt des Schaltvorganges. Danach ergibt sich unter erneuter Zunahme des Motorlastmomentes $T_{Last}$ eine zweite Spitze S2, wonach der Wert der Ableitung des Motorlastmomentes wieder auf einen Wert zurückfällt, wie er typischerweise außerhalb eines Schaltvorganges vorkommt. Dieser Wert außerhalb eines Schaltvorganges pendelt im Rahmen eines Rauschbandes um den Wert 0.

Figur 2b zeigt eine Motordrehzahl $n_{Motor}$ über der Zeit t, wobei der dargestellte Zeitraum dem Zeitraum entspricht, der in der Figur 2a dargestellt ist. Dementsprechend zeigt ein Teil des Graphen für die Motordrehzahl den Verlauf während eines Schaltvorganges SV. Dabei steigt die Motordrehzahl zunächst deutlich über die Motordrehzahl außerhalb des Schaltvorganges SV an, um dann auf ein merklich niedrigeres Niveau abzufallen. Danach steigt die Motordrehzahl wieder an und pendelt sich auf einem Niveau ein, welches etwas unterhalb des Niveaus vor dem Schaltvorgang SV liegt. Dies bedeutet, dass eine längere Übersetzung gewählt worden ist, wobei sich die Fahrzeuggeschwindigkeit nicht wesentlich geändert hat.

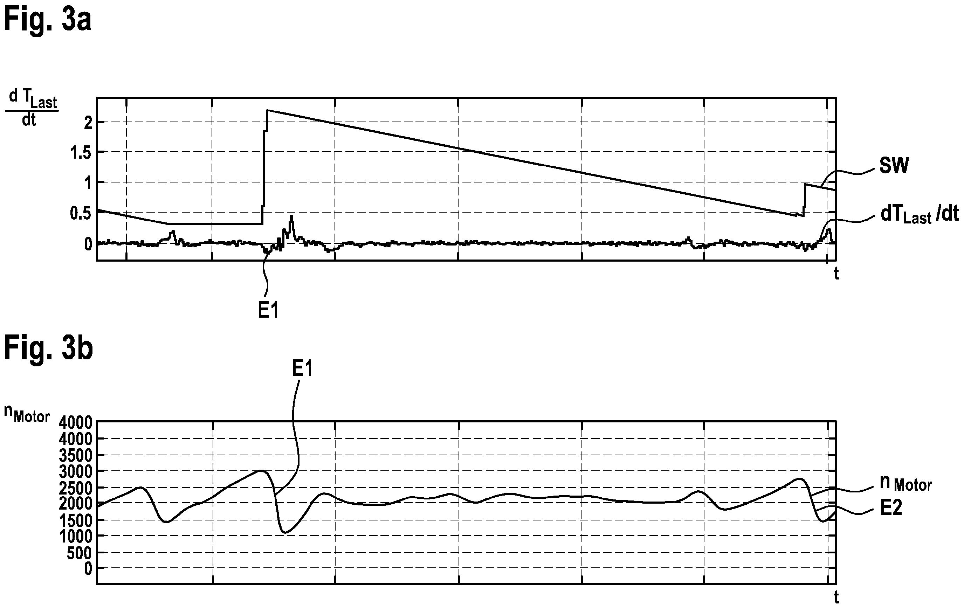

Figur 3a zeigt ein weiteres Diagramm einer zeitlichen Ableitung des Motorlastmomentes $dT_{Last}/dt$ über der Zeit. In dem dargestellten Zeitraum ist kein Schaltvorgang vorhanden. Im Unterschied zu dem Diagramm aus Figur 2a ist der Schwellenwert SW nicht konstant, sondern variabel und wird dynamisch an den Fahrbetrieb angepasst. Dabei wird der Schwellenwert SW in Abhängigkeit von Ereignissen im Verlauf der zeitlichen Ableitung des Motorlastmomentes $dT_{Last}/dt$ eingestellt. Ein Algorithmus zur Einstellung des Schwellenwerts SW sucht dabei in der Ableitung des Lastmomentes $dT_{Last}/dt$ nach signifikanten Abweichungen von den Standardwerten ohne Schaltvorgang unter den Wert 0, wie sie als Ereignis E1 vorkommen können. Wenn eine solche Abweichung gefunden wird, wird daraus geschlossen, dass ein durch den Fahrbetrieb verursachter Abfall der Ableitung des Lastmomentes $dT_{Last}/dt$ vorliegt. Im Gegensatz dazu steigt bei einem Schaltvorgang die Ableitung des Lastmomentes $dT_{Last}/dt$ zunächst an, sodass davon ausgegangen werden kann, dass kein Schaltvorgang, sondern raues Gelände vorliegt. Als Reaktion auf diesen Fall setzt der Algorithmus den Schwellenwert SW erheblich nach oben. Dies ist sinnvoll, weil nach einem wegbedingten Einbruch der Ableitung des Lastmomentes $dT_{Last}/dt$ nach geringer Zeit ein entgegenwirkender Anstieg folgt, welcher nicht mit einem Schaltvorgang zusammenhängt, jedoch ohne besondere Maßnahmen als ein solcher erkannt werden könnte. Daher ist es nützlich, den Schwellenwert SW anzuheben, weil eine Fehlerkennung eines Schaltvorganges so vermieden werden kann.

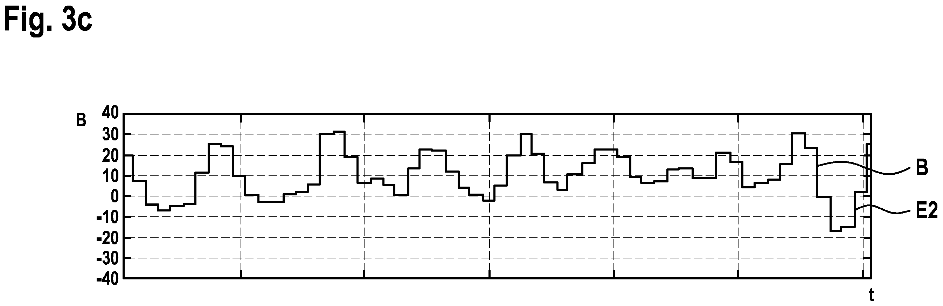

Außerdem wird der Schwellenwert SW in Abhängigkeit von Beschleunigungssignalen eingestellt, welche in der Figur 3c dargestellt sind. Wie aus der Figur 3a hervorgeht, wird kurz vor Ende des dargestellten Zeitraums der Schwellenwert SW merklich erhöht. Der Algorithmus zur Einstellung des Schwellenwertes SW reagiert dabei auf einen Einbruch im Beschleunigungssignal B, der in der Figur 3c zeitlich an derselben Stelle und als Ereignis E2 dargestellt ist. Ein derartiger Einbruch in der Beschleunigung B kann als ein Sprung oder anderweitiges Außereingrifftreten eines Antriebsrades mit dem Boden gewertet werden. Auf ein solches Ereignis folgt in der Ableitung des Motorlastmomentes $dT_{Last}/dt$ üblicherweise ein Anstieg, welcher als Schaltvorgang fehlinterpretiert werden könnte. Da jedoch der Schwellenwert SW angehoben wird, ist die Wahrscheinlichkeit, dass eine Fehlerkennung aufgrund der vorgenannten Reaktion der Ableitung des Motorlastmomentes $dT_{Last}/dt$ stattfindet, erheblich verringert.

Figur 3b zeigt in demselben zeitlichen Intervall wie Figur 3a die Motordrehzahl $n_{Motor}$ über der Zeit. Der Verlauf der Motordrehzahl $n_{Motor}$ schwankt insbesondere zu Beginn des gezeigten Zeitintervalls stark, was auf eine sehr ungleichmäßige Fahrt hindeutet. Zum Zeitpunkt des Ergebnisses E1 fällt die Motordrehzahl $n_{Motor}$ stark ab, woraufhin sie wieder ansteigt. Mit diesem Verhalten hängt der Einbruch und der anschließende Anstieg der zeitlichen Ableitung des Motorlastmomentes $dT_{Last}/dt$, welches in Figur 3a gezeigt ist, zusammen. Auch beim Einbruch der Beschleunigung B beim Ereignis E2, welches in Figur 3c dargestellt ist, fällt die Motordrehzahl $n_{Motor}$ erheblich ab.

In der Figur 3c ist ein Verlauf einer Beschleunigung B über der Zeit in t über denselben Zeitraum dargestellt, der auch in den Figuren 3a und 3b dargestellt ist. Die Beschleunigung schwankt erheblich und ist teilweise negativ. Dies lässt darauf schließen, dass die Fahrt eine Geländefahrt ist. Der größte Einbruch in den Verlauf der Beschleunigung B ereignet sich zum Ereignis E2, bei dem die Beschleunigung stark negativ wird. Eine Korrelation des Ereignisses E1 mit besonderen Verhältnissen im Verlauf der Beschleunigung B lässt sich nicht feststellen. Auch lässt sich keine Korrelation des Verlaufes der zeitlichen Ableitung des Motorlastmomentes $dT_{Last}/dt$ mit der stark negativen Beschleunigung B zum Zeitpunkt des Ereignisses E2 herleiten. Daher ist ein erheblicher Vorteil, dass zur Erhöhung der Sicherheit bei der Vermeidung einer Fehlerkennung eines Schaltvorganges sowohl die zeitliche Ableitung des Lastmomentes $dT_{Last}/dt$ als auch das Beschleunigungssignal B zur Beeinflussung des Schwellenwertes SW herangezogen werden.

**Patentansprüche**

1. Verfahren zur Erkennung eines Schaltvorgangs (SV) eines Getriebes eines mit Motorkraft eines Motors und/oder Pedalkraft betreibbaren Fahrzeugs (1), wobei

   • eine Motordrehzahl ($n_{Motor}$) des Motors und ein inhärentes Motordrehmoment ($T_{Motor}$) ermittelt werden, und
   • aus der Änderung der Motordrehzahl ($n_{Motor}$) des Motors und dem Motordrehmoment ($T_{Motor}$) ein Motorlastmoment ($T_{Last}$) berechnet wird, und
   • eine zeitliche Ableitung des Motorlastmoments ($dT_{Last}/dt$) mit einem Schwellenwert (SW) verglichen wird, um am Ergebnis des Vergleichs den Schaltvorgang (SV) zu erkennen, wobei
   • eine Geländefahrt

      • an negativen Ausschlägen einer zeitlichen Ableitung des Lastmoments ($dT_{Last}/dt$) des Motors in einem Ausmaß, das größer als eine Vorgabe ist, und/oder
      • an einer Überschreitung eines vorgegebenen Ausmaßes einer Beschleunigung (B) des Fahrzeugs (1),

      erkannt wird, und
   • bei einer erkannten Geländefahrt die Schalterkennung durch Anpassung des Schwellenwerts (SW) unempfindlicher gemacht oder abgeschaltet wird.

2. Verfahren nach Anspruch 1, **dadurch gekennzeichnet, dass** eine gemessene Beschleunigung (B) des Fahrzeugs (1) bei der Erkennung eines Schaltvorgangs (SV) zusätzlich berücksichtigt wird.

3. Verfahren nach Anspruch 1 oder 2, **dadurch gekennzeichnet, dass** die Empfindlichkeit der Erkennung des Schaltvorgangs (SV) bei Zunahme der vertikalen Beschleunigung (B) des Fahrzeugs (1), durch Einstellen des Schwellenwerts (SW) angepasst wird und insbesondere unempfindlicher gemacht oder abgeschaltet wird.

4. Verfahren nach einem der vorangehenden Ansprüche, **dadurch gekennzeichnet, dass** ein Schaltvorgang (SV) nicht erkannt wird, wenn einer Erhöhung der Motordrehzahl ($n_{Motor}$) und/oder eine Verringerung des Motorlastmoments ($T_{Motor}$), eine vertikal nach oben gerichtete Beschleunigung (B) des Fahrzeugs und/oder eine Bremsbeschleunigung (B) des Fahrzeugs (1) vorausgeht.

5. Schalterkennungsvorrichtung für die Erkennung eines Schaltvorgangs eines Getriebes eines mit Motorkraft eines Motors und/oder Pedalkraft betreibbaren Fahrzeugs (1), insbesondere nach einem der Verfahren in den Ansprüchen 1 bis 4, **dadurch gekennzeichnet, dass** die Schalterkennungsvorrichtung dazu eingerichtet ist,

   • eine Motordrehzahl ($n_{Motor}$) des Motors und ein inhärentes Motordrehmoment ($T_{Motor}$) zu bestimmen, und
   • aus der Änderung der Motordrehzahl ($n_{Motor}$) des Motors sowie dem Motordrehmoment ($T_{Motor}$) ein Motorlastmoment ($T_{Last}$) zu berechnen

      • eine zeitliche Ableitung des Motorlastmoments ($dT_{Last}/dt$) mit einem Schwellenwert (SW) zu vergleichen, um am Ergebnis des Vergleichs den Schaltvorgang (SV) zu erkennen, wobei die Schalterkennungsvorrichtung
   • eine Geländefahrt

      • an negativen Ausschlägen einer zeitlichen Ableitung des Lastmoments ($dT_{Last}/dt$) des Motors in einem Ausmaß, das größer als eine Vorgabe ist, und/oder
      • an einer Überschreitung eines vorgegebenen Ausmaßes einer Beschleunigung (B) des Fahrzeugs (1),

      erkennt, und
   • bei einer erkannten Geländefahrt die Schalterkennung durch Anpassung des Schwellenwerts (SW) unempfindlicher macht oder abschaltet.

6. Schalterkennungsvorrichtung nach Anspruch 5, **dadurch gekennzeichnet, dass** die Schalterkennungsvorrichtung einen Beschleunigungssensor aufweist, der dazu eingerichtet ist, eine Beschleunigung (B) des Fahrzeugs (1) zu messen, wobei die Schalterkennungsvorrichtung dazu eingerichtet ist, die Beschleunigung (B), insbesondere eine vertikale Beschleunigung (B), bei der Erkennung eines Schaltvorgangs (SV) zusätzlich zu berücksichtigen.

7. Schalterkennungsvorrichtung nach einem der Ansprüche 5 oder 6, **dadurch gekennzeichnet, dass** die Schalterkennungsvorrichtung dazu eingerichtet ist, aus einer zeitlichen Ableitung des Motorlastmoments ($T_{Last}$) und insbesondere aus der Motordrehzahl ($n_{Motor}$) und/oder der Beschleunigung (B) eine Größe zu berechnen und mit einem Schwellenwert (SW) zu vergleichen, um an dem Ergebnis des Vergleichs den Schaltvorgang zu erkennen.

8. Schalterkennungsvorrichtung nach Anspruch 7, **dadurch gekennzeichnet, dass** die Empfindlichkeit der Erkennung bei Zunahme der Beschleunigung (B) des Fahrzeugs (1) durch Einstellen des Schwellenwerts (SW) angepasst wird und insbesondere unempfindlicher gemacht oder abgeschaltet wird.

9. Schalterkennungsvorrichtung nach einem der Ansprüche 6 bis 8, **dadurch gekennzeichnet, dass** der Beschleunigungssensor an einem Lenker, insbesondere an einer Bedieneinheit (8) am Lenker, an einer Batterie (4) oder an einer Antriebseinheit (2) des Fahrzeugs (1) angeordnet ist.

**Claims**

1. Method for detecting a shift operation (SV) of a transmission of a vehicle (1) which can be operated with the motor force of a motor and/or pedal force, wherein

   • a motor rotational speed ($n_{Motor}$) of the motor and an inherent motor torque ($T_{Motor}$) are determined, and
   • a motor load torque ($T_{Last}$) is calculated from the change in the motor rotational speed ($n_{Motor}$) of the motor and the motor torque ($T_{Motor}$), and
   • a time derivative of the motor load torque ($dT_{Last}/dt$) is compared with a threshold value (SW) in order to detect the shift operation (SV) from the result of the comparison, wherein
   • off-road travel is detected

      • from negative deflections of a time derivative of the load torque ($dT_{Last}dt$) of the motor to an extent which is greater than a specification, and/or
      • from the predefined extent of acceleration (B) of the vehicle (1) being exceeded, and

   • when off-road travel is detected the detection of shifting is made less sensitive by adapting the threshold value (SW) or is switched off.

2. Method according to Claim 1, **characterized in that** a measured acceleration (B) of the vehicle (1) is additionally taken into account during the detection of a shift operation (SV).

3. Method according to Claim 1 or 2, **characterized in that** when the vertical acceleration (B) of the vehicle (1) increases, the sensitivity of the detection of the shift operation (SV) is adapted by adjusting the threshold value (SW), and said sensitivity is, in particular made less sensitive or is switched off.

4. Method according to one of the preceding claims, **characterized in that** a shift operation (SV) is not detected if it is preceded by an increase in the motor rotational speed ($n_{Motor}$) and/or a reduction in the motor load torque ($T_{Motor}$), a vertically upwards acceleration (B) of the vehicle and/or a braking acceleration (B) of tbe vehicle (1).

5. Shift detection device for detecting a shift operation of a transmission of a vehicle (1) which can be operated with motor force of a motor and/or pedal force, in particular according to one of the methods in Claims 1 to 4, **characterized in that** the shift detection device is configured

   • to determine a motor rotational speed ($n_{Motor}$) of the motor and an inherent motor torque ($T_{Motor}$), and
   • to calculate a motor load torque ($T_{Last}$) from the change in the motor rotational speed ($n_{Motor}$) of the motor and the motor torque ($T_{Motor}$), and
   • to compare a time derivative of the motor load torque ($dT_{Last}/dt$) with a threshold value (SW) in order to detect the shift operation (SV) from the result of the comparison,
   wherein the shift detection device detects
   • off-road travel

      • from negative deflections of a time derivative of the load torque ($dT_{Last}/dt$) of the motor to an extent which is greater than a pre-specification, and/or
      • from a pre-specified extent of an acceleration (B) of the vehicle (1) being exceeded,

   and
   • when off-road travel is detected, the shift detection device makes the shift detection less sensitive (SW) or switches it off.

6. Shift detection device according to Claim 5, **characterized in that** the shift detection device has an acceleration sensor which is configured to measure an acceleration (B) of the vehicle (1), wherein the shift detection device is configured to additionally take into account the acceleration (B), in particular a vertical acceleration (B), during the detection of a shift operation (SV).

7. Shift detection device according to one of Claims 5 and 6, **characterized in that** the shift detection device is configured to calculate a variable from a time derivative of the motor load torque ($T_{Last}$) and, in particular, from the motor rotational speed ($n_{Motor}$) and/or the acceleration (B) and to compare it with a threshold value (SW) in order to detect the shift operation from the result of the comparison.

8. Shift detection device according to Claim 7, **characterized in that** when the acceleration (B) of the vehicle (1) increases, the sensitivity of the detection is adapted by adjusting the threshold value (SW) and is, in particular, made less sensitive or switched off.

9. Shift detection device according to one of Claims 6 to 8, **characterized in that** the acceleration sensor is arranged on a steering apparatus, in particular on an operator control unit (8) on the steering apparatus, on a battery (4) or on a drive unit (2) of the vehicle (1).

**Revendications**

1. Procédé de détection d'un processus de passage des rapports (SV) d'une boîte de vitesses d'un véhicule (1) mû par la force motrice d'un moteur et/ou par une force de pédalage,
dans lequel

   • un régime moteur ($n_{Motor}$) du moteur et un couple moteur inhérent ($T_{Motor}$) sont déterminés, et
   • un couple de charge moteur ($T_{Last}$) est calculé à partir de la variation du régime moteur ($n_{Motor}$) du moteur et du couple moteur ($T_{Motor}$), et
   • une dérivée temporelle du moment de charge moteur ($dT_{Last}/dt$) est comparée à une valeur de seuil (SW) afin de détecter le processus de passage des rapports (SV) sur la base du résultat de la comparaison, dans lequel
   • un trajet tout-terrain est détecté
   • lors d'excursions négatives d'une dérivée temporelle du couple de charge ($dT_{Last}/dt$) du moteur de valeur supérieure à une spécification, et/ou
   • lors d'un dépassement d'une valeur prédéterminée d'une accélération (B) du véhicule (1), et
   • lors de la détection d'un trajet tout-terrain, la détection du passage des rapports est rendue moins sensible ou est désactivée par adaptation de la valeur de seuil (SW).

2. Procédé selon la revendication 1, **caractérisé en ce qu'**une accélération mesurée (B) du véhicule (1) est en outre prise en compte lors de la détection d'un processus de passage des rapports (SV).

3. Procédé selon la revendication 1 ou 2, **caractérisé en ce que** la sensibilité de la détection du processus de passage des rapports (SV) est adaptée lors d'une augmentation de l'accélération verticale (B) du véhicule (1) par réglage de la valeur de seuil (SW) et est notamment rendue moins sensible ou est désactivée.

4. Procédé selon l'une des revendications précédentes, **caractérisé en ce qu'**un processus de passage des rapports (SV) n'est pas détecté lorsqu'une augmentation du régime moteur ($n_{Motor}$) et/ou une réduction du couple moteur ($T_{Motor}$), une accélération verticale (B) du véhicule dirigée vers le haut et/ou une décélération (B) du véhicule (1) se produit au préalable.

5. Dispositif de détection de passage des rapports pour la détection d'un processus de passage des rapports d'une boîte de vitesses d'un véhicule (1) mû par la force motrice d'un moteur et/ou par une force de pédalage, notamment conformément à l'un des procédés selon les revendications 1 à 4, **caractérisé en ce que** le dispositif de détection de passage des rapports est conçu

   • pour déterminer un régime moteur ($n_{Motor}$) du moteur et un couple moteur inhérent ($T_{Motor}$), et
   • pour calculer un couple de charge moteur ($T_{Last}$) à partir de la variation du régime moteur ($n_{Motor}$) du moteur et du couple moteur ($T_{Motor}$)
   • pour comparer une dérivée temporelle du couple de charge moteur ($dT_{Last}/dt$) à une valeur de seuil (SW) afin de détecter le processus de passage des rapports (SV) sur la base du résultat de la comparaison,
   dans lequel le dispositif de détection passage des rapports détecte
   • un trajet tout-terrain
   • lors d'excursions négatives d'une dérivée temporelle du couple de charge ($dT_{Last}/dt$) du moteur de valeur supérieure à une spécification, et/ou
   • lors d'un dépassement d'une valeur prédéterminée d'une accélération (B) du véhicule (1), et
   • lors de la détection d'un trajet tout-terrain, la détection du passage des rapports est rendue moins sensible ou est désactivée par adaptation de la valeur de seuil (SW).

6. Dispositif de détection de passage des rapports selon la revendication 5, **caractérisé en ce que** le dispositif de détection de passage des rapports comporte un capteur d'accélération qui est conçu pour mesurer une accélération (B) du véhicule (1), dans lequel le dispositif de détection de passage des rapports est en outre conçu pour prendre en compte l'accélération (B), notamment une accélération verticale (B), lors de la détection d'un processus de passage des rapports (SV).

7. Dispositif de détection de passage des rapports selon l'une des revendications 5 ou 6, **caractérisé en ce que** le dispositif de détection de passage des rapports est conçu pour calculer une grandeur à partir d'une dérivée temporelle du couple moteur ($T_{last}$) et notamment du régime moteur ($n_{Motor}$) et/ou de l'accélération (B), et pour la comparer à une valeur de seuil (SW) afin de détecter le processus de passage des rapports sur la base du résultat de la comparaison.

8. Dispositif de détection de passage des rapports selon la revendication 7, **caractérisé en ce que** la sensibilité de la détection est adaptée lors d'une augmentation de l'accélération (B) du véhicule (1) par réglage de la valeur de seuil (SW) et est notamment rendue moins sensible ou est désactivée.

9. Dispositif de détection de passage des rapports selon l'une des revendications 6 à 8, **caractérisé en ce que** le capteur d'accélération est disposé sur un guidon, notamment sur une unité de commande (8) sur le guidon, sur une batterie (4) ou sur une unité de commande (2) du véhicule (1).

# Fig. 1

# Fig. 2a

# Fig. 2b

## Fig. 3a

## Fig. 3b

EP 3 227 173 B1

# Fig. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011158220 A2
- DE 102012219991 A1